# EUROPEAN PATENT APPLICATION

(11) **EP 3 492 169 A1**
(43) Date of publication of application: **05.06.2019**
(21) Application number: 17834513.8
(22) Date of filing: 28.07.2017
(51) Int. Cl.: B01J 27/053, B01D 53/86

(54) **EXHAUST GAS DENITRATION CATALYST, CO OXIDATION CATALYST, EXHAUST GAS TREATMENT SYSTEM, AND EXHAUST GAS TREATMENT METHOD**

(30) Priority: 29.07.2016 JP 2016150471
(71) Applicant: Mitsubishi Hitachi Power Systems, Ltd., Yokohama-shi, Kanagawa 220-8401 (JP)
(72) Inventor: MASUDA, Tomotsugu, Yokohama-shi Kanagawa 220-8401 (JP); ISOBE, Tomoaki, Yokohama-shi Kanagawa 220-8401 (JP); HIGASHINO, Koji, Tokyo 108-8215 (JP)
(74) Representative: Henkel, Breuer & Partner
(86) International application number: PCT/JP2017/027373
(87) International publication number: WO 2018/021511

(57) **Abstract**

An exhaust gas treatment catalyst includes iridium in a range from 0.25% to 20.0% by weight that is supported by barium sulfate, and is used for treating an exhaust gas containing CO in a range from 4000 ppm to 15000 ppm.

## Description

### TECHNICAL FIELD

The present invention relates to an exhaust gas denitration catalyst, a CO oxidation catalyst, an exhaust gas treatment system, and an exhaust gas treatment method.

### BACKGROUND ART

### Background Art of Invention of First Group

As is commonly known, nitrogen oxides (NOₓ) in an exhaust gas are subjected to denitration treatment.

As the denitration treatment of the exhaust gas, a denitration treatment is carried out by adding ammonia as a reductant. In addition, there is also known related art which utilizes CO contained in the exhaust gas from the beginning as the reductant (Patent Document 1). This technique intends to reduce costs without having to add ammonia as the reductant.

Here, an exhaust gas from a sintering furnace, for example, contains an especially high concentration of CO.

For the exhaust gas containing the high concentration of CO as mentioned above, a denitration actively utilizing CO is preferable.

However, a catalyst adopting CO as the reductant causes a rise in temperature due to a CO oxidation exothermic reaction and thus has a significant impact on denitration performance attributable to a change in temperature at an inlet of the catalyst. Due to variations in temperature distribution of the exhaust gas in a flue and the temperature control at the inlet of the catalyst, the denitration performance would vary and would be difficult to maintain at a satisfactory level.

### Background Art of Invention of Second Group

Here, halogens, organic substances, organic silicon compounds, and SOₓ in general also coexist in a gas containing high concentration of CO such as the abovementioned exhaust gas from the sintering furnace and the like. For this reason, options for usable CO oxidation catalysts are limited for the above-described exhaust gas. If a general CO oxidation catalyst such as a platinum/alumina-based catalyst is used, catalytic performance of the catalyst tends to deteriorate in a short time due to SOₓ.

On the other hand, as demonstrated in embodiments to be described later, the inventors of the present invention made an evaluation of a Pt/TiO₂-based catalyst having excellent SOₓ resistance while using an actual gas from a sintering furnace or the like, and consequently confirmed deterioration in performance in a short time. If oxidation performance is high, it is likely that SOₓ is also oxidized at the same time, whereby purple smoke is generated due to an increase in SO₃; accordingly, an instrument located on a subsequent stage is significantly affected by sulfuric acid corrosion.

### REFERENCE DOCUMENT LIST

### PATENT DOCUMENT

Patent Document 1: JP 2004-033989 A

### SUMMARY OF THE INVENTION

### PROBLEMS TO BE SOLVED BY THE INVENTION

### Object of Invention of First Group

In view of the aforementioned circumstances, it is an object of the present invention to provide an exhaust gas denitration catalyst, an exhaust gas treatment system, and an exhaust gas treatment method, which are capable of exerting a preferred denitration performance irrespective of temperature distribution of an exhaust gas in a flue, while using CO as a reductant.

### Object of Invention of Second Group

In view of the aforementioned circumstances, it is an object of the present invention to provide a CO oxidation catalyst, an exhaust gas treatment system, and an exhaust gas treatment method, which are capable of subjecting an exhaust gas containing a high concentration of CO to an oxidation treatment of the contained CO without promoting oxidation of SOₓ.

### MEANS FOR SOLVING THE PROBLEM

### Invention of First Group

As a result of extensive studies, the inventors of the present invention have discovered that a catalyst in which barium sulfate (BaSO₄) supports iridium (Ir) can exert a sufficient denitration performance on an exhaust gas containing a high concentration of CO irrespective of temperature distribution.

### Invention of Second Group

Meanwhile, as a result of extensive studies, the inventors of the present invention have arrived at the finding that a catalyst in which barium sulfate (BaSO₄) supports iridium (Ir) can subject an exhaust gas containing a high concentration of CO to a treatment to oxidize CO contained therein without promoting oxidation of SOₓ.

### Invention Consolidating First Group and Second Group

In other words, to attain the object, the invention consolidating the first group and the second group provides an exhaust gas treatment catalyst in one aspect. The exhaust gas treatment catalyst includes iridium in a range from 0.25% to 20.0% by weight which is supported by barium sulfate. Here, the catalyst can be used to treat an exhaust gas containing CO in a range from 4000 to 15000 ppm.

### Invention of First Group

Meanwhile, to attain the object, the invention of the first group provides an exhaust gas denitration catalyst in one aspect. The exhaust gas denitration catalyst includes iridium in a range from 0.25% to 2.0% by weight which is supported by barium sulfate. Here, the catalyst can be used to conduct a denitration treatment on an exhaust gas containing CO in a range from 4000 to 15000 ppm and containing a NOₓ component targeted for reduction and removal.

In one embodiment, the exhaust gas denitration catalyst according to the invention of the first group can be used for conducting the denitration treatment on the exhaust gas in which a combination of a variation in catalyst inlet temperature control and a variation in catalyst inlet cross-sectional temperature is in a range of ±15°C at a minimum and in a range of ±30°C at a maximum.

Meanwhile, in the exhaust gas denitration catalyst according to one embodiment of the invention of the first group, the exhaust gas is an exhaust gas from a sintering furnace.

The invention of the first group provides an exhaust gas treatment system in another aspect. The exhaust gas treatment system includes a denitration device provided with the exhaust gas denitration catalyst according to the invention of the first group.

The exhaust gas treatment system according to one embodiment of the invention of the first group further includes a heating device configured to heat the exhaust gas before the exhaust gas is flowed into the denitration device.

The invention of the first group provides an exhaust gas treatment method in still another aspect. The exhaust gas treatment method includes reducing and removing a NOₓ component with the denitration device including the exhaust gas denitration catalyst according to the invention of the first group, while using CO contained in the exhaust gas.

In the exhaust gas treatment method according to one embodiment of the invention of the first group, the exhaust gas is heated before the exhaust gas is flowed into the denitration device.

### Invention of Second Group

In the meantime, to attain the object, the invention of the second group provides a CO oxidation catalyst in one aspect. The CO oxidation catalyst includes iridium in a range from 0.25% to 20.0% by weight which is supported by barium sulfate. Here, the catalyst can be used to conduct a treatment to oxidize CO in an exhaust gas containing CO in a range from 4000 to 15000 ppm.

Meanwhile, in the CO oxidation catalyst according to one embodiment of the invention of the second group, the exhaust gas is an exhaust gas from a sintering furnace.

The invention of the second group provides an exhaust gas treatment system in another aspect. The exhaust gas treatment system includes a CO oxidation device provided with the CO oxidation catalyst according to the invention of the second group.

The exhaust gas treatment system according to one embodiment of the invention of the second group further includes a heating device configured to heat the exhaust gas before the exhaust gas is flowed into the CO oxidation device.

The invention of the second group provides an exhaust gas treatment method in still another aspect. The exhaust gas treatment method includes oxidizing CO contained in the exhaust gas with the CO oxidation device including the CO oxidation catalyst, which is provided with the CO oxidation catalyst according to the invention of the second group.

In the exhaust gas treatment method according to one embodiment of the invention of the second group, the exhaust gas is heated before the exhaust gas is flowed into the CO oxidation device.

### EFFECTS OF THE INVENTION

### Effect of Invention of First Group

According to the present invention, there are provided an exhaust gas denitration catalyst, an exhaust gas treatment system, and an exhaust gas treatment method, which are capable of exerting a preferred denitration performance irrespective of temperature distribution of an exhaust gas in a flue while using CO as a reductant.

### Effect of Invention of Second Group

According to the present invention, there are provided a CO oxidation catalyst, an exhaust gas treatment system, and an exhaust gas treatment method, which are capable of subjecting an exhaust gas containing a high concentration of CO to an oxidation treatment of CO contained therein without promoting oxidation of SOₓ.

### BRIEF DESCRIPTION OF THE DRAWINGS

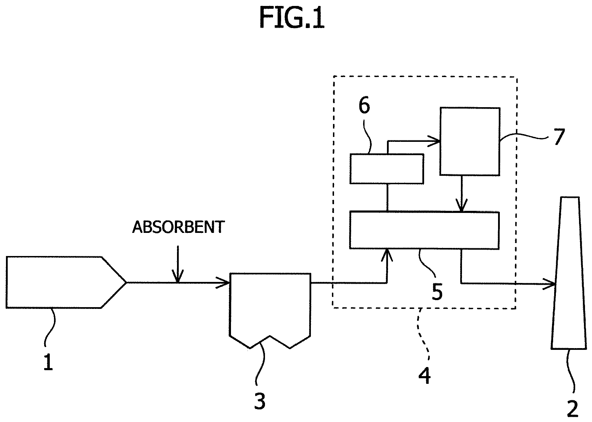

FIG. 1 is a conceptual diagram explaining an exhaust gas treatment system adopting an exhaust gas denitration catalyst according to an embodiment of the present invention.

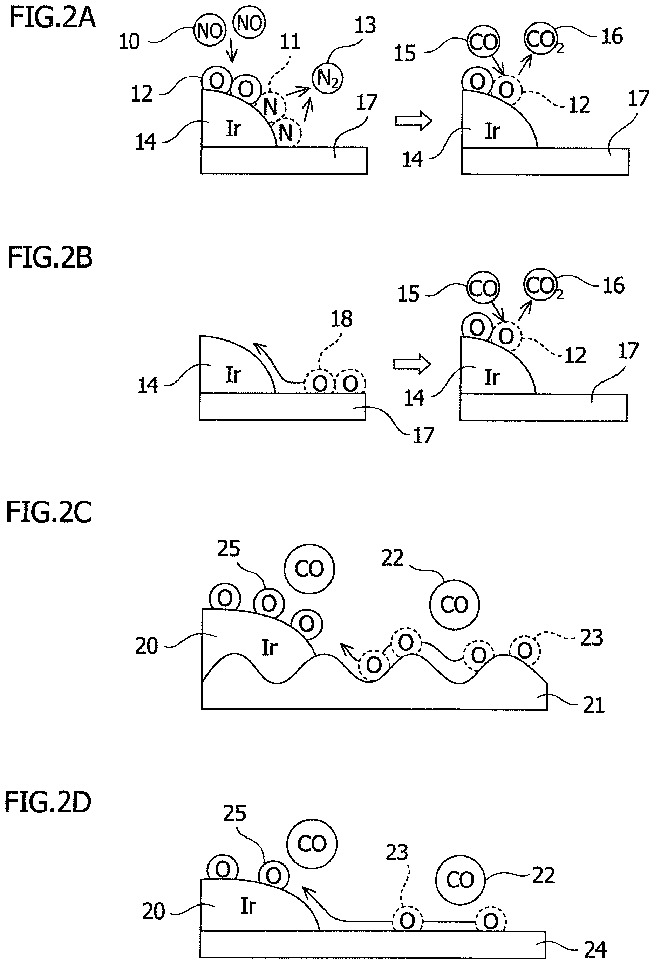

FIG. 2(a) is a conceptual diagram explaining a main reaction of a CO denitration reaction for describing mechanisms in which the exhaust gas denitration catalyst according to the present invention promotes the CO denitration reaction while suppressing a CO oxidation reaction.
FIG. 2(b) is a conceptual diagram explaining the CO oxidation reaction (a side reaction) for describing the mechanisms in which the exhaust gas denitration catalyst according to the present invention promotes the CO denitration reaction while suppressing the CO oxidation reaction.
FIG. 2(c) is a conceptual diagram explaining a reaction model of an Ir/TiO₂ catalyst for describing the mechanisms in which the exhaust gas denitration catalyst according to the present invention promotes the CO denitration reaction while suppressing the CO oxidation reaction.
FIG. 2(d) is a conceptual diagram explaining a reaction model of an Ir/BaSO₄ catalyst for describing the mechanisms in which the exhaust gas denitration catalyst according to the present invention promotes the CO denitration reaction while suppressing the CO oxidation reaction.

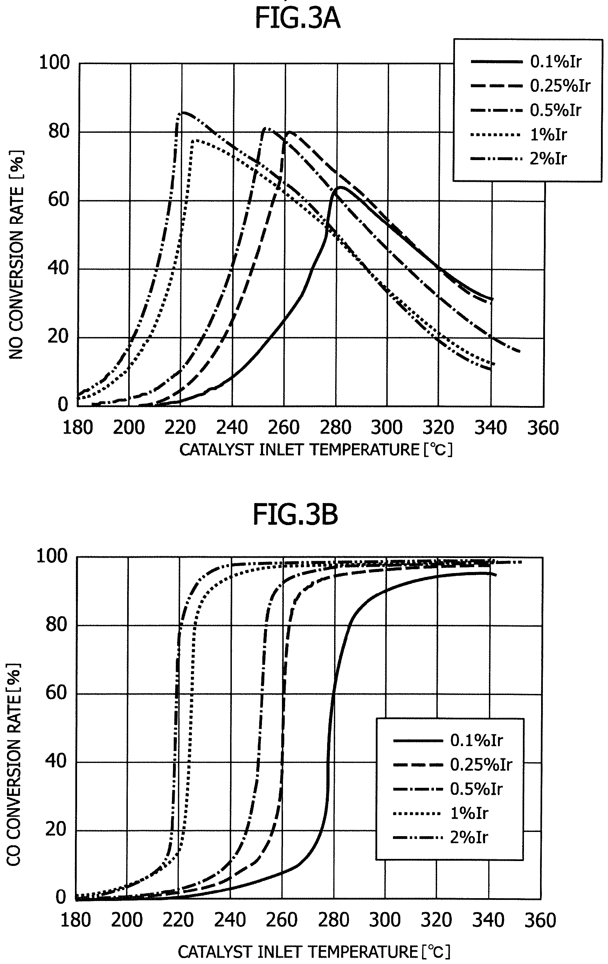

FIG. 3(a) is a graph explaining a relation between a supported amount of iridium and a NO conversion rate regarding the exhaust gas denitration catalyst according to the present invention.
FIG. 3(b) is a graph explaining a relation between the supported amount of iridium and a CO conversion rate regarding the exhaust gas denitration catalyst according to the present invention.

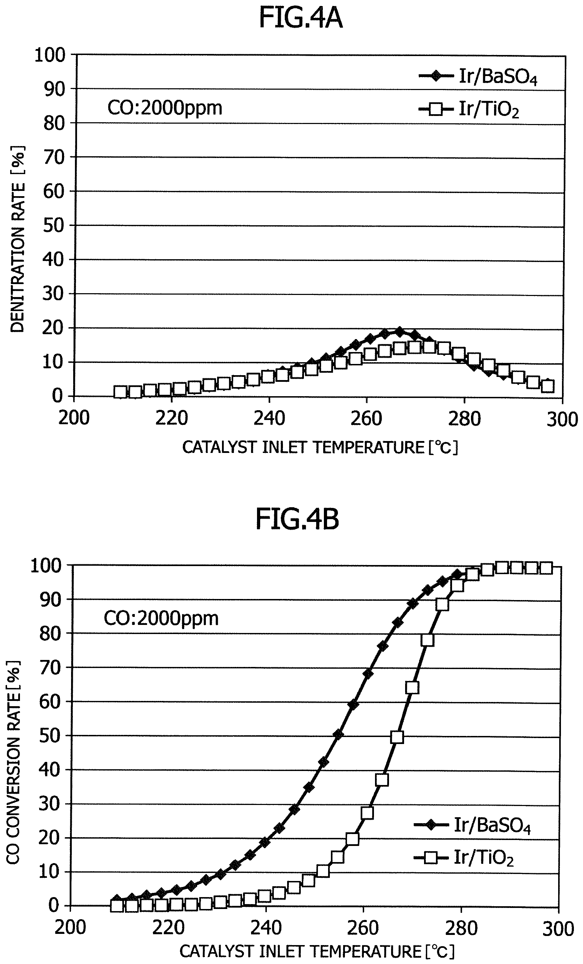

FIG. 4(a) is a graph relating to the exhaust gas denitration catalyst according to the present invention, which shows a relation between a catalyst inlet temperature and a denitration rate regarding each of the Ir/BaSO₄ catalyst (the exhaust gas denitration catalyst according to the present invention) and Ir/TiO₂ (a comparative exhaust gas denitration catalyst) under conditions of a CO concentration of the exhaust gas set to 2000 ppm and AV = 10.3 [Nm/hr].
FIG. 4(b) is a graph relating to the exhaust gas denitration catalyst according to the present invention, which shows a relation between the catalyst inlet temperature and a CO conversion rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 2000 ppm and AV = 10.3 [Nm/hr].

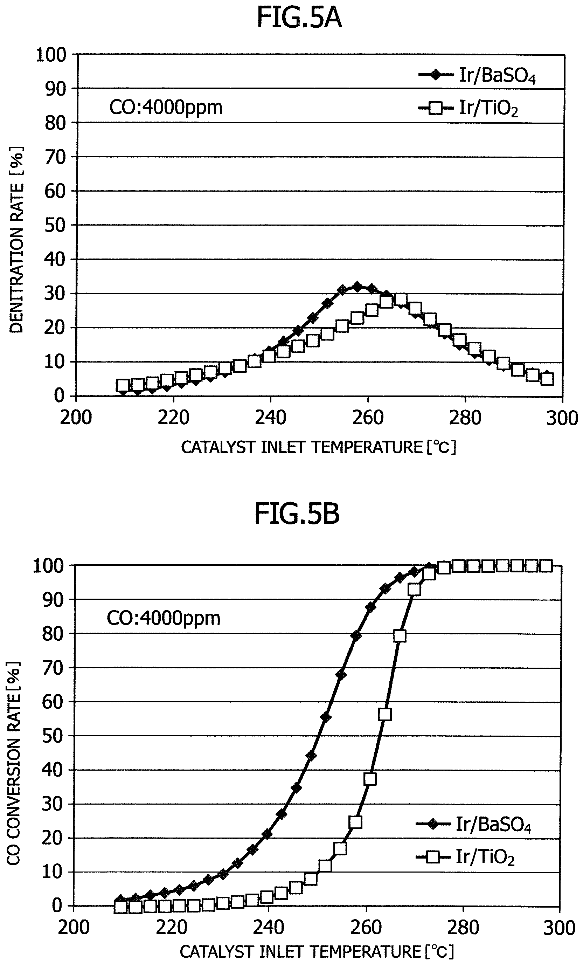

FIG. 5(a) is a graph relating to the exhaust gas denitration catalyst according to the present invention, which shows a relation between the catalyst inlet temperature and the denitration rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 4000 ppm and AV = 10.3 [Nm/hr].
FIG. 5(b) is a graph relating to the exhaust gas denitration catalyst according to the present invention, which shows a relation between the catalyst inlet temperature and the CO conversion rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 4000 ppm and AV = 10.3 [Nm/hr].

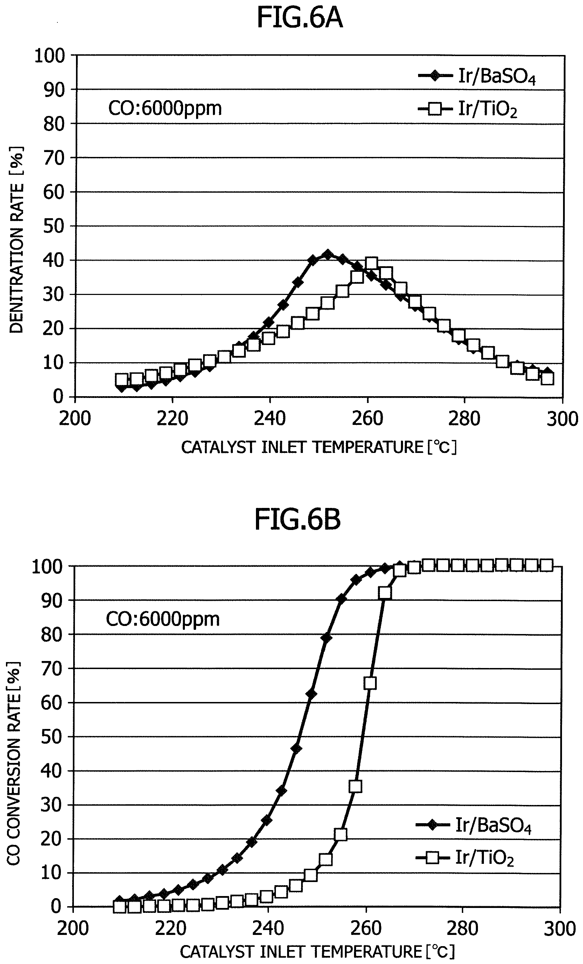

FIG. 6(a) is a graph relating to the exhaust gas denitration catalyst according to the present invention, which shows a relation between the catalyst inlet temperature and the denitration rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 6000 ppm and AV = 10.3 [Nm/hr].
FIG. 6(b) is a graph relating to the exhaust gas denitration catalyst according to the present invention, which shows a relation between the catalyst inlet temperature and the CO conversion rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 6000 ppm and AV = 10.3 [Nm/hr].

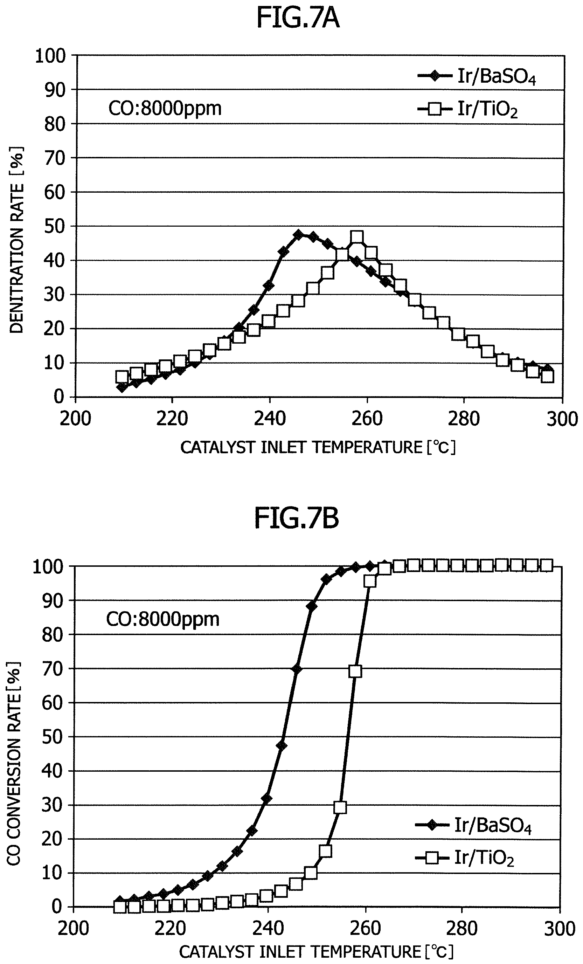

FIG. 7(a) is a graph relating to the exhaust gas denitration catalyst according to the present invention, which shows a relation between the catalyst inlet temperature and the denitration rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 8000 ppm and AV = 10.3 [Nm/hr].
FIG. 7(b) is a graph relating to the exhaust gas denitration catalyst according to the present invention, which shows a relation between the catalyst inlet temperature and the CO conversion rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 8000 ppm and AV = 10.3 [Nm/hr].

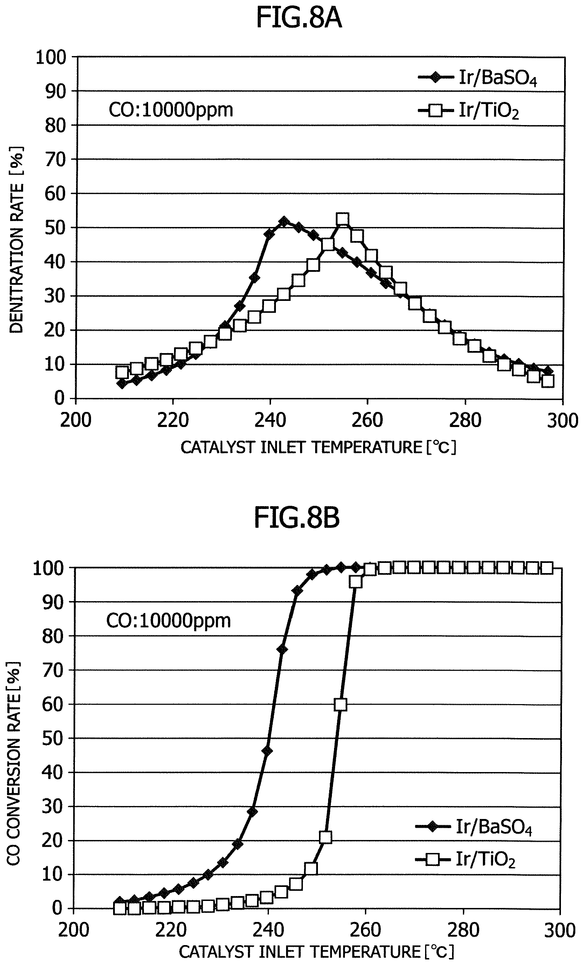

FIG. 8(a) is a graph relating to the exhaust gas denitration catalyst according to the present invention, which shows a relation between the catalyst inlet temperature and the denitration rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 10000 ppm and AV = 10.3 [Nm/hr].
FIG. 8(b) is a graph relating to the exhaust gas denitration catalyst according to the present invention, which shows a relation between the catalyst inlet temperature and the CO conversion rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 10000 ppm and AV = 10.3 [Nm/hr].

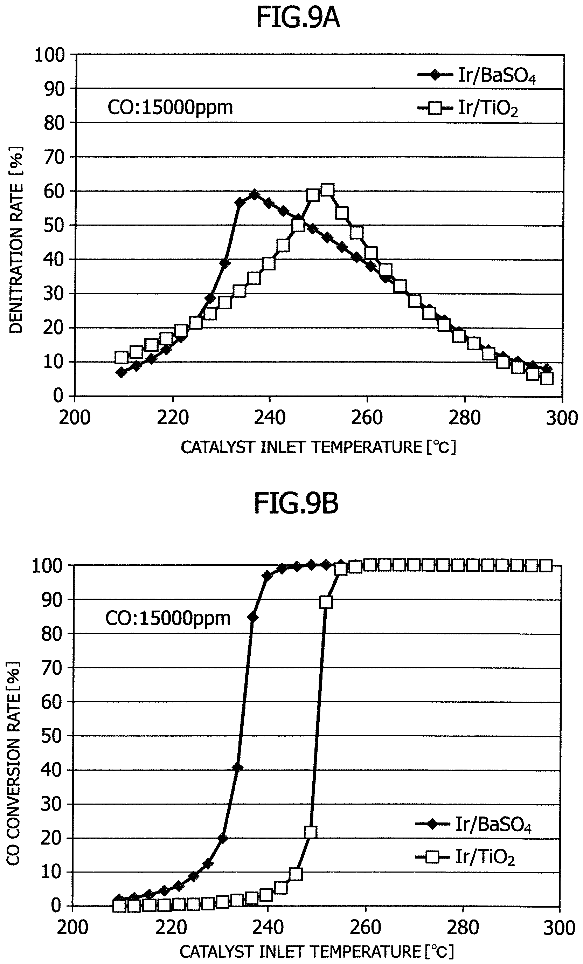

FIG. 9(a) is a graph relating to the exhaust gas denitration catalyst according to the present invention, which shows a relation between the catalyst inlet temperature and the denitration rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 15000 ppm and AV = 10.3 [Nm/hr].
FIG. 9(b) is a graph relating to the exhaust gas denitration catalyst according to the present invention, which shows a relation between the catalyst inlet temperature and the CO conversion rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 15000 ppm and AV = 10.3 [Nm/hr].

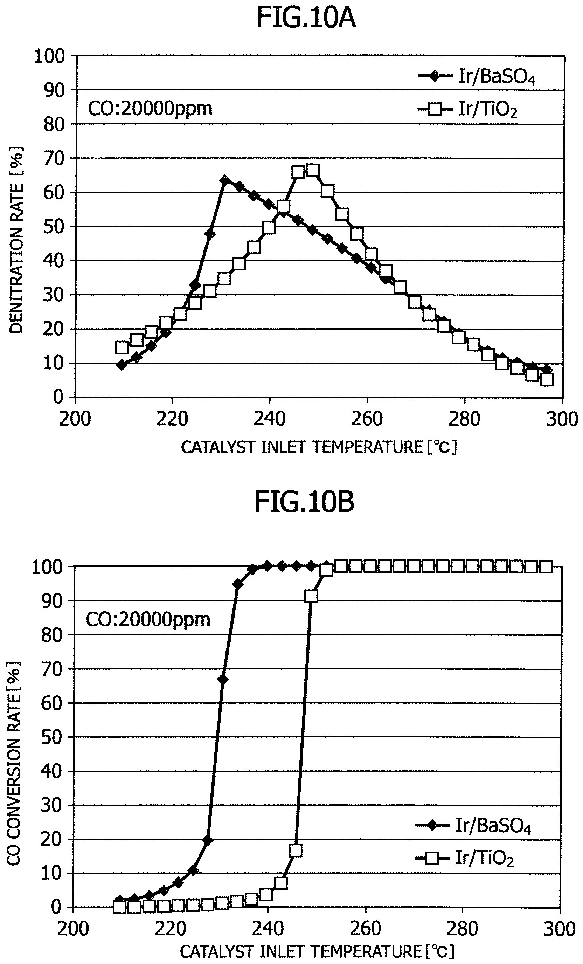

FIG. 10(a) is a graph relating to the exhaust gas denitration catalyst according to the present invention, which shows a relation between the catalyst inlet temperature and the denitration rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 20000 ppm and AV = 10.3 [Nm/hr].
FIG. 10(b) is a graph relating to the exhaust gas denitration catalyst according to the present invention, which shows a relation between the catalyst inlet temperature and the CO conversion rate regarding each of the Ir/BaSO₄ catalyst (the exhaust gas denitration catalyst according to the present invention) and Ir/TiO₂ (the comparative exhaust gas denitration catalyst) under the conditions of the CO concentration of the exhaust gas set to 20000 ppm and AV = 10.3 [Nm/hr].

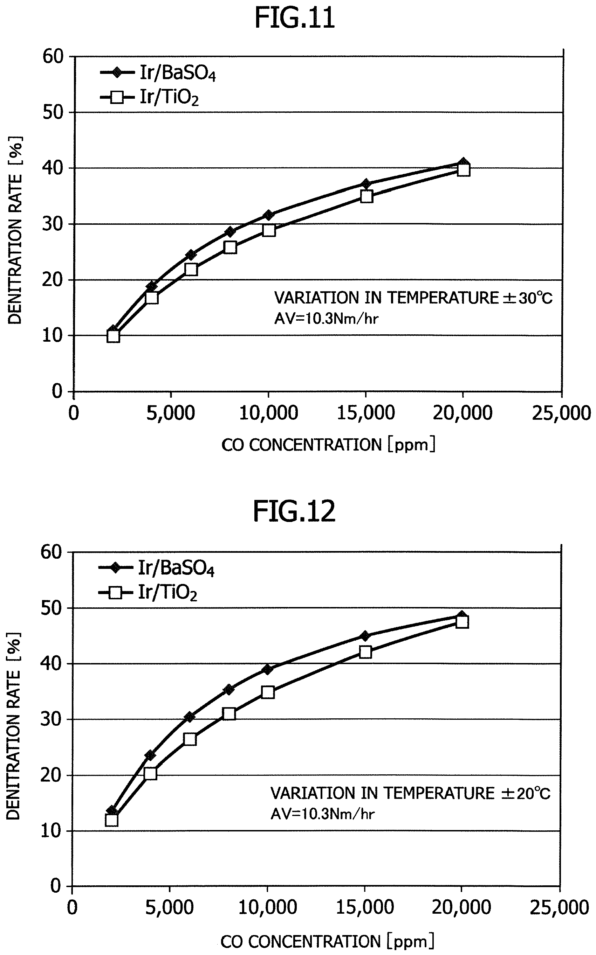

FIG. 11 is a graph relating to the exhaust gas denitration catalyst according to the present invention, which shows a relation between an inlet CO concentration and the denitration rate regarding each of the Ir/BaSO₄ catalyst (the exhaust gas denitration catalyst according to the present invention) and Ir/TiO₂ (the comparative exhaust gas denitration catalyst) under conditions of a variation in catalyst inlet temperature control and a variation in catalyst inlet cross-sectional temperature uniformly varying in a range of ±30°C, and AV = 10.3 [Nm/hr].
FIG. 12 is a graph relating to the exhaust gas denitration catalyst according to the present invention, which shows a relation between the inlet CO concentration and the denitration rate regarding each of the Ir/BaSO₄ catalyst (the exhaust gas denitration catalyst according to the present invention) and Ir/TiO₂ (the comparative exhaust gas denitration catalyst) under conditions of the variation in catalyst inlet temperature control and the variation in catalyst inlet cross-sectional temperature uniformly varying in a range of ±20°C, and AV = 10.3 [Nm/hr].

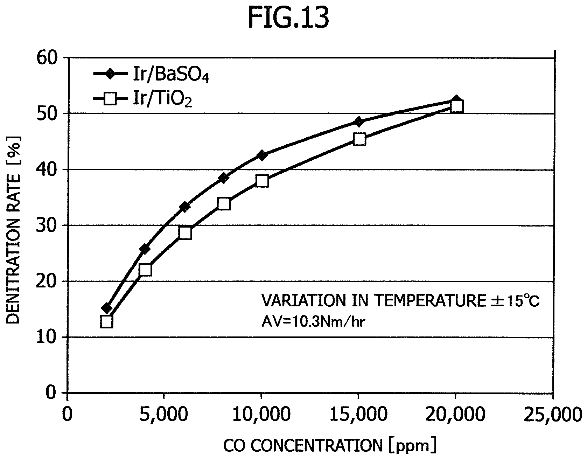

FIG. 13 is a graph relating to the exhaust gas denitration catalyst according to the present invention, which shows a relation between the inlet CO concentration and the denitration rate regarding each of the Ir/BaSO₄ catalyst (the exhaust gas denitration catalyst according to the present invention) and Ir/TiO₂ (the comparative exhaust gas denitration catalyst) under conditions of the variation in catalyst inlet temperature control and the variation in catalyst inlet cross-sectional temperature uniformly varying in a range of ±15°C, and AV = 10.3 [Nm/hr].

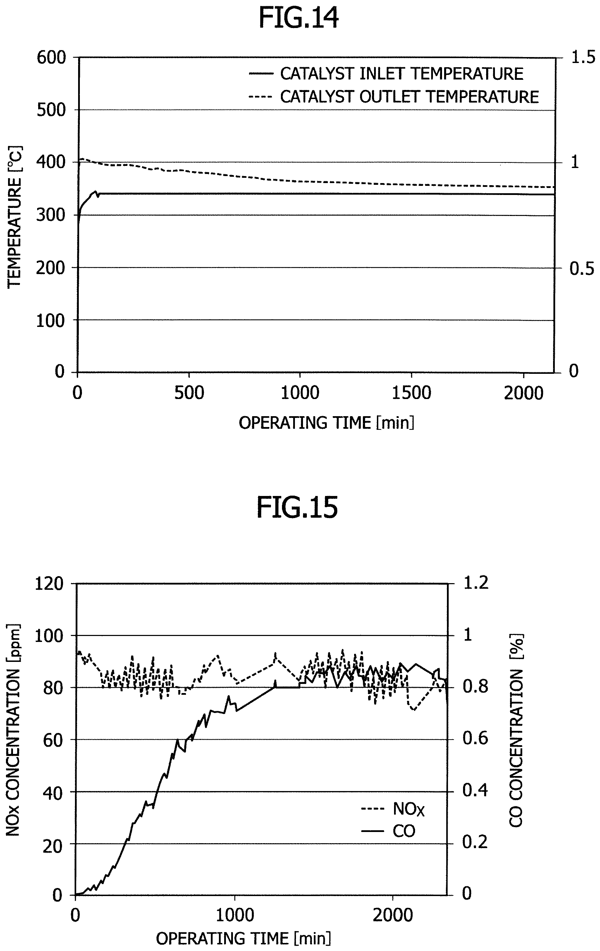

FIG. 14 is a graph showing changes in catalyst inlet and outlet temperatures over operating time regarding a Pt/TiO₂ catalyst.
FIG. 15 is a graph showing changes in NOₓ concentration and CO concentration at a catalyst outlet over the operating time regarding the Pt/TiO₂ catalyst.

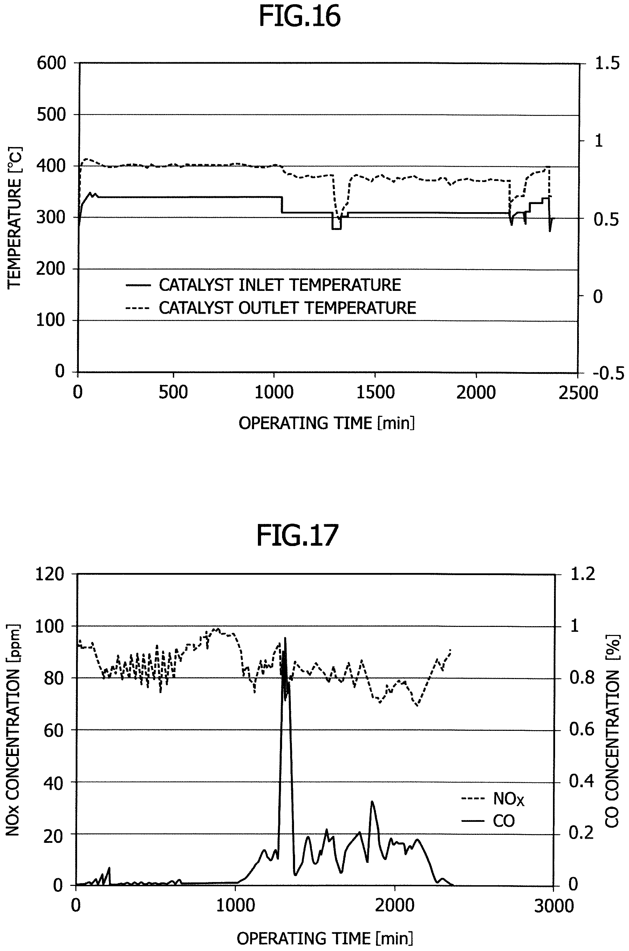

FIG. 16 is a graph showing changes in catalyst inlet and outlet temperatures over the operating time regarding the Ir/BaSO₄ catalyst (a CO oxidation catalyst according to the present invention).
FIG. 17 is a graph showing changes in NOₓ concentration and CO concentration at the catalyst outlet over the operating time regarding the Ir/BaSO₄ catalyst (the CO oxidation catalyst according to the present invention).

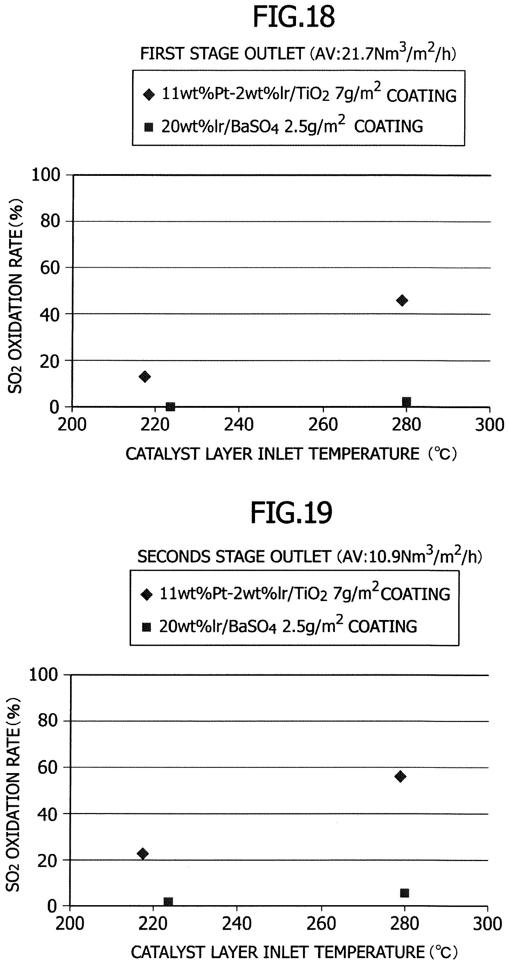

FIG. 18 is a graph showing a relation between a catalytic layer inlet temperature and a SO₂ oxidation rate regarding each of the Ir/BaSO₄ catalyst (the CO oxidation catalyst according to the present invention) and Pt-Ir/TiO₂ (a comparative CO oxidation catalyst).
FIG. 19 is another graph showing the relation between the catalytic layer inlet temperature and the SO₂ oxidation rate regarding each of the Ir/BaSO₄ catalyst (the CO oxidation catalyst according to the present invention) and Pt-Ir/TiO₂ (the comparative CO oxidation catalyst).

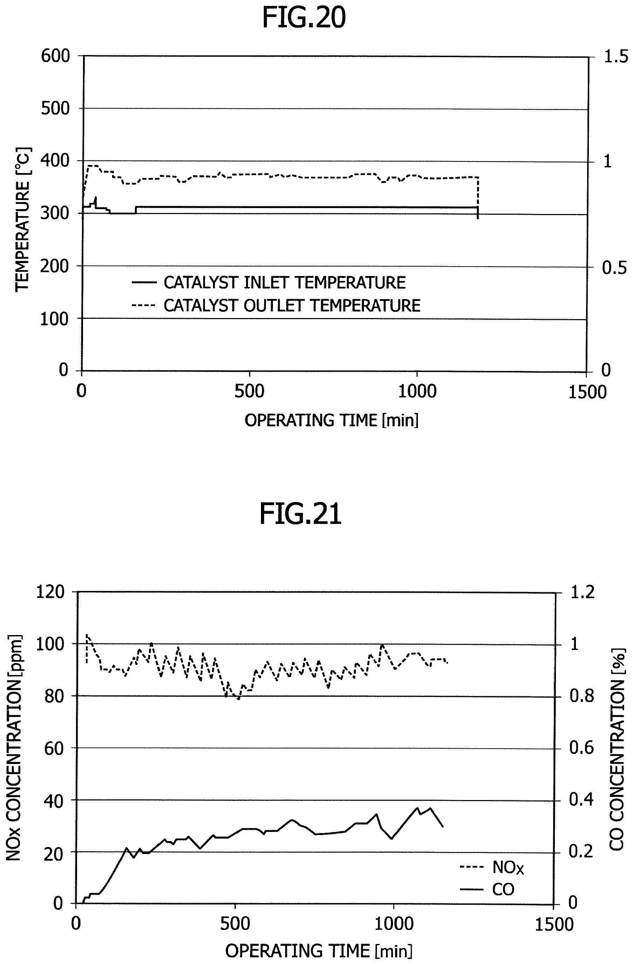

FIG. 20 is a graph showing changes in catalyst inlet and outlet temperatures over the operating time regarding the Ir/BaSO₄ catalyst (the CO oxidation catalyst according to the present invention).
FIG. 21 is a graph showing changes in NOₓ concentration and CO concentration at the catalyst outlet over the operating time regarding the Ir/BaSO₄ catalyst (the CO oxidation catalyst according to the present invention).

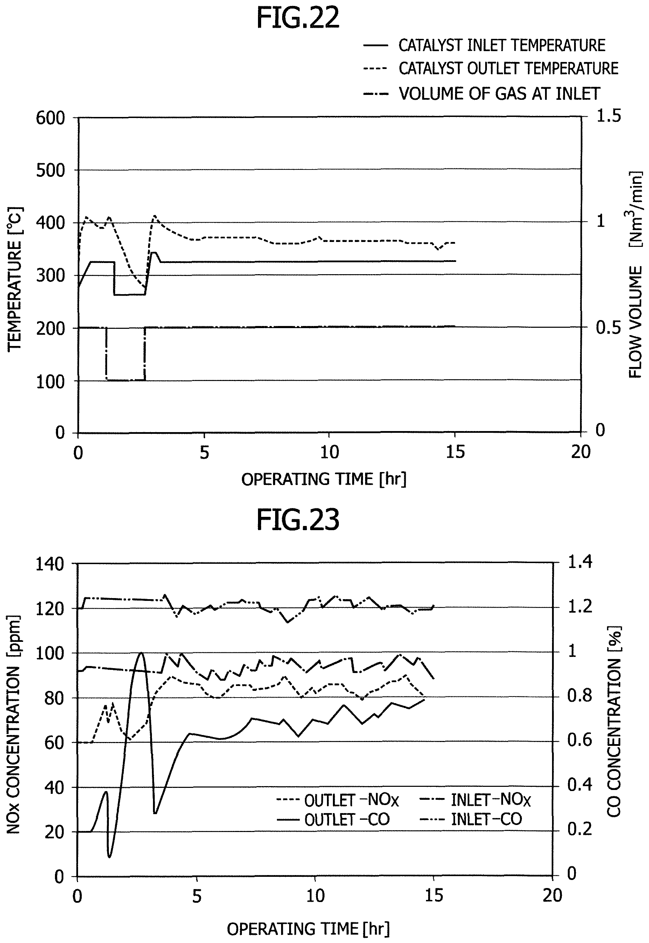

FIG. 22 is a graph showing changes in catalyst inlet and outlet temperatures over the operating time regarding the Ir/BaSO₄ catalyst (the CO oxidation catalyst according to the present invention).
FIG. 23 is a graph showing changes in NOₓ concentration and CO concentration at the catalyst outlet over the operating time regarding the Ir/BaSO₄ catalyst (the CO oxidation catalyst according to the present invention).

### MODES FOR CARRYING OUT THE INVENTION

### Invention of First Group

Regarding the invention of the first group, an exhaust gas denitration catalyst, an exhaust gas treatment system, and an exhaust gas treatment method according to the present invention will be described below in further detail. Note that none of the exhaust gas denitration catalyst, the exhaust gas treatment system, and the exhaust gas treatment method according to the present invention will be limited to the embodiment described below.

### Invention of Second Group

Regarding the invention of the second group, a CO oxidation catalyst, an exhaust gas treatment system, and an exhaust gas treatment method according to the present invention will be described below in further detail. Note that none of the CO oxidation catalyst, the exhaust gas treatment system, and the exhaust gas treatment method according to the present invention will be limited to the embodiment described below.

### Method of Manufacturing Exhaust Gas Denitration Catalyst (Invention of First Group)

An exhaust gas denitration catalyst according to the present invention is prepared by causing iridium to be supported on barium sulfate. A method of manufacturing the exhaust gas denitration catalyst according to an embodiment of the present invention will be described below.

For instance, a catalyst support material is obtained by: preparing an iridium aqueous solution such that iridium is supported in a range from 0.25% to 2.0% by weight relative to a total amount of iridium and barium sulfate; dipping barium sulfate in the aqueous solution; and then subjecting the obtained material to evaporation to dryness at a temperature in a range from 120°C to 200°C.

The obtained support material is calcined in air at a temperature in a range from 400°C to 600°C for 3 to 10 hours. Thus, it is possible to prepare a barium sulfate powder catalyst that supports iridium.

Water such as ion-exchanged water as well as any of colloidal silica (silica sol) and a mixture of colloidal silica and alumina sol, for example, are added to the above-described barium sulfate powder catalyst, and then the mixture is crushed and blended together in a ball mill or the like to prepare a wash coat slurry.

Subsequently, a honeycomb base material is dipped in the prepared slurry.

Thereafter, the honeycomb base material is calcined and then subjected to a reductive activation treatment to obtain an end product in which the base material is coated with the catalyst (barium sulfate that supports iridium).

The aforementioned iridium aqueous solution may be an aqueous solution that can impregnate the support with iridium (Ir) by dipping and cause the support to support iridium. Examples of the aqueous solution include aqueous solutions dissolving any powder of iridium (IV) nitrate (Ir(NO₃)₄), iridium (III) sulfate hydrate (Ir(SO₄)₃·nH₂O), iridium (IV) sulfate hydrate (Ir(SO₄)₂·nH₂O), chloroiridic (III) acid hydrate (IrCl₃·nH₂O), chloroiridic (IV) acid hydrate (IrCl₄·nH₂O), iridium (IV) sodium chloride hexahydrate (Na₂IrCl₆·6H₂O), and the like. Meanwhile, more examples of the aqueous solution include aqueous solutions obtained by diluting any of solutions of iridium (III) chloride solution (H₃IrCl₆), iridium (II) chloride solution (H₂IrCl₆), sodium chloroiridate (III) solution (Na₃IrCl₆), sodium chloroiridate (II) solution (Na₂IrCl₆), sodium hexabromoiridate (III) solution (Na₂IrBr₆), hexaammineiridium (III) chloride solution (Ir(NH₃)₆Cl₃), hexaammineiridium (III) hydroxide solution (Ir(NH₃)₆(OH)₃), and hexaammineiridium (III) nitrate solution (Ir(NH₃)₆(NO₃)₃).

Other metal substances that can be supported together with iridium, namely, titanium, zirconium, chromium, manganese, iron, cobalt, zinc, aluminum, tin, nickel, copper, calcium, magnesium, lanthanum, strontium, and barium show sufficient activity with an amount not less than 0.001 part by weight for 100 parts by weight of the support. Here, as a method of supporting one or more of these metal substances, it is possible to cite a supporting method by means of co-immersion while using an aqueous solution of a chloride or a nitrate of any of these metal substances.

### Method of Manufacturing CO Oxidation Catalyst (Invention of Second Group)

A CO oxidation catalyst according to the present invention (the invention of the second group) is prepared by causing iridium to be supported on barium sulfate as with the exhaust gas denitration catalyst according to the present invention (the invention of the first group). The embodiment described above in conjunction with the method of manufacturing an exhaust gas denitration catalyst according to the present invention (the invention of the first group) is also applicable to a method of manufacturing a CO oxidation catalyst (the invention of the second group) without change. Accordingly, the same contents described earlier regarding the embodiment will be incorporated herein by reference.

It is to be noted, however, that the CO oxidation catalyst according to the invention of the second group is obtained by: preparing an iridium aqueous solution such that iridium is supported in a range from 0.25% to 20.0% by weight relative to the total amount of iridium and barium sulfate; dipping barium sulfate in the aqueous solution; and then subjecting the obtained material to evaporation to dryness at a temperature in the range from 120°C to 200°C. In other words, an upper limit of the supported amount of iridium is 20.0% by weight.

### Exhaust Gas Treatment System (Invention of First Group)

Next, an exhaust gas treatment system according to the embodiment of the invention of the first group adopting the exhaust gas denitration catalyst of the present invention will be described below. It is to be noted that an exhaust gas treatment method according to the invention of the first group will practically be explained as well by describing this embodiment.

FIG. 1 shows the exhaust gas treatment system according to the embodiment of the invention of the first group. FIG. 1 conceptually illustrates an exhaust gas treatment facility from a sintering furnace 1 to a stack 2. As shown in FIG. 1, an absorbent such as calcium hydroxide, calcium carbonate, and sodium bicarbonate is put into an exhaust gas from the sintering furnace 1. After absorbing SO₂ with a surface sedimentary layer of a fabric filter 3, dust is collected from the exhaust gas with the fabric filter 3, then the exhaust gas is denitrated with an exhaust gas treatment system 4 and is eventually discharged from the stack 2.

Here, the exhaust gas treatment system 4 of this embodiment at least includes a gas-gas heater 5, a heating device 6, and a denitration device 7.

The gas-gas heater 5 is designed to play a role in exchanging heat between the exhaust gas from the sintering furnace 1 which is passed through the fabric filter 3 and the exhaust gas from the denitration device 7.

A temperature of the exhaust gas targeted for the denitration treatment is in a range from about 60°C to 150°C at a location upstream of the gas-gas heater 5.

The heating device 6 is provided downstream of the gas-gas heater 5 and upstream of the denitration device 7. The heating device 6 heats the exhaust gas flowed into the denitration device 7 up to 240°C, for example, with reaction heat of a combustion exhaust gas by using a heating burner. In other words, the heating device 6 heats the exhaust gas to a temperature (230°C to 270°C) suitable for denitration while using CO in the exhaust gas as a heating fuel as well as a reductant. After the exhaust gas is heated as described above, the exhaust gas is sent to the denitration device 7.

Here, it is preferable to control the temperature to be increased depending on the CO concentration so as to increase a catalyst inlet temperature (an inlet temperature of the denitration device 7) to such a temperature that can obtain a denitration performance peak value at the CO concentration. Here, the "denitration performance peak value" is a "reference temperature for the denitration performance peak value" that brings about a peak value in consideration of a variation in catalyst inlet temperature control and a variation in catalyst inlet cross-sectional temperature in accordance with the common technical knowledge of a person skilled in the art.

The denitration device 7 is provided downstream of the heating device 6. The denitration device 7 is a fixed-bed denitration device. The denitration device 7 incorporates the exhaust gas denitration catalyst according to the present invention, and is configured to denitrate the exhaust gas by using CO in the exhaust gas as the reductant.

The exhaust gas denitration catalyst according to the present invention aims at treating the exhaust gas that contains CO at a concentration in a range from 4000 to 15000 ppm. In this case, CO plays a role as the reductant for reducing NOₓ in the exhaust gas. The exhaust gas from the sintering furnace 1 targeted for the treatment with the exhaust gas treatment system 4 as described with reference to FIG. 1 contains CO at the concentration in the range from 4000 to 15000 ppm, and is therefore suitable as a treatment target.

The exhaust gas denitration catalyst according to the present invention increases its denitration rate relatively steeply along with a rise in temperature toward such a temperature at which the denitration rate reaches a peak at the concentration of CO in the range from 4000 to 15000 ppm. Specifically, a relatively large portion of CO is allotted to the denitration before reaching the peak of the denitration rate and a portion of CO to be combusted is low in this case. After having reached the peak of the denitration rate, the denitration rate (catalyst activity) gently declines even when the temperature of the exhaust gas becomes higher. In other words, the exhaust gas can be favorably denitrated with CO at the concentration in the range from 4000 to 15000 ppm irrespective of the variation in catalyst inlet temperature control and the variation in catalyst inlet cross-sectional temperature that bring about temperature distribution in a range from ±15°C to ±30°C. This aspect will be confirmed in examples to be described later.

Here, "the variation in catalyst inlet temperature control and the variation in catalyst inlet cross-sectional temperature that bring about temperature distribution in a range from ±15°C to ±30°C" means that superposition (overlap) of the variation in catalyst inlet temperature control and the variation in catalyst inlet cross-sectional temperature resultantly brings about the temperature distribution in the range from ±15°C to ±30°C. Specifically, in a case in which "the variation in catalyst inlet temperature control and the variation in catalyst inlet cross-sectional temperature brings about temperature distribution in a range of ±15°C at a minimum", for example, then the variation in catalyst inlet cross-sectional temperature shows ±10°C at the minimum if the variation in catalyst inlet temperature control shows ±5°C.

Note that the expression "variation in catalyst inlet temperature control" in this specification and in the claims means a variation in temperature at the inlet of the catalyst to be measured over time. Here, the expression over time means at predetermined time intervals such as once every hour.

Meanwhile, the expression "variation in catalyst inlet cross-sectional temperature" in this specification and in the claims means a variation in temperature in a cross-sectional direction inside a catalyst reactor. In the case of the denitration device 7, for instance, on the assumption of a cross-section perpendicular to a direction of flow (from the inlet to the outlet) of the exhaust gas, a variation in temperature on the cross-section represents this variation.

### Mechanisms of Promoting CO Denitration Reaction and Suppressing CO Oxidation Reaction

Next, reasons it is possible to promote a CO denitration reaction and to suppress a CO oxidation reaction at the same time will be described with reference to FIGs. 2(a) to 2(d).

First, a main reaction of the CO denitration reaction will be described with reference to FIG. 2(a). Here, the reaction is assumed to include the following formulae:

2NO+4Ir → 2Ir-N+2Ir-O;

2Ir-N → N₂+2Ir;

2CO+2Ir-O → 2CO₂+2Ir;

and

2NO+2CO → N₂+2CO₂.

In the main reaction of the CO denitration reaction, NO molecules 10 are adsorbed on surfaces of Ir atoms 14 and are dissociated into nitrogen atoms 11 and oxygen atoms 12. The nitrogen atoms 11 are formed into N₂ molecules 13 and are hence desorbed. Meanwhile, the oxygen atoms 12 cover the surfaces of the Ir atoms 14. The oxygen atoms 12 on the surfaces of the Ir atoms 14 react with CO molecules 15 in a gas phase and are desorbed as CO₂ molecules 16. The CO denitration reaction proceeds in this way.

Next, a side reaction of the CO denitration reaction will be described with reference to FIG. 2(b). Here, the reaction is assumed to include the following formula:

2CO+2O (oxygen on the support) → 2CO₂.

In the side reaction, oxygen atoms 18 in a support 17 cause reverse spill-over and move onto the surfaces of the Ir atoms 14. Then, the oxygen atoms 18 on the surfaces of the Ir atoms 14 react with the CO molecules 15 in the gas phase, and are desorbed as the CO₂ molecules 16. A CO oxidation reaction proceeds in this way.

A further description will be given on the premise of the main reaction and the side reaction as explained above.

An Ir/BaSO₄ catalyst is assumed to be the exhaust gas denitration catalyst according to the present invention while an Ir/TiO₂ catalyst is assumed to be a comparative exhaust gas denitration catalyst. Note that the Ir/BaSO₄ catalyst used in Examples 3 and 4 to be described later has a specific surface area of 2.3 m²/g whereas the Ir/TiO₂ catalyst has a specific surface area of 12 m²/g. Accordingly, the specific surface area of the Ir/BaSO₄ catalyst is significantly smaller than the specific surface area of the Ir/TiO₂ catalyst.

Assuming that FIG. 2(c) represents a reaction model of the Ir/TiO₂ catalyst, titanium oxide 21 constituting a support has a large specific surface area and therefore has a large absolute number of oxygen atoms 23 on a surface of the support. Accordingly, more oxygen atoms 23 move to surfaces of Ir atoms 20 whereby a relatively large number of oxygen atoms 25 on the surfaces of the Ir atoms 20 react with CO molecules 22 in a gas phase. As a consequence, the reaction between the oxygen atoms 25 on the surfaces of the Ir atoms 20 and the CO molecules 22 is not suppressed.

On the other hand, assuming that FIG. 2(d) represents a reaction model of the Ir/BaSO₄ catalyst, barium sulfate 24 constituting a support has a small specific surface area and therefore has a small absolute number of oxygen atoms 23 on a surface of the support. Accordingly, fewer oxygen atoms 23 move to the surfaces of the Ir atoms 20 whereby a relatively small number of the oxygen atoms 25 on the surfaces of the Ir atoms 20 react with the CO molecules 22 in the gas phase. As a consequence, the reaction between the oxygen atoms 25 on the surfaces of the Ir atoms 20 and the CO molecules 22 is suppressed. Meanwhile, the absolute number of oxygen atoms 23 on the surface of the support is low while the oxygen atoms 25 on the surfaces of the Ir atoms 20 are relatively increased, whereby the reaction with the NO molecules and transformation of CO are thought to proceed.

From the above-described perspectives, the CO reduction denitration reaction is thought to proceed selectively and preferentially by using the exhaust gas denitration catalyst according to the present invention.

As described above, since the exhaust gas treatment system of this embodiment includes the exhaust gas denitration catalyst according to the present invention, it is possible to improve a NO conversion rate (the denitration rate) on a low temperature side by promoting the CO reduction denitration reaction while suppressing the CO oxidation reaction at the same time during the exhaust gas denitration treatment.

### Exhaust Gas Treatment System (Invention of Second Group)

Next, an exhaust gas treatment system according to the embodiment of the invention of the second group adopting the exhaust gas denitration catalyst of the present invention will be described below. It is to be noted that an exhaust gas treatment method according to the invention of the second group will practically be explained as well by describing this embodiment.

An exhaust gas treatment system according to the invention of the second group will be described with reference to FIG. 1, which is identical to the one used for describing the exhaust gas treatment system according to the invention of the first group. In the exhaust gas treatment system according to the invention of the second group, the apparatus described earlier as the denitration device 7 will be regarded as a CO oxidation device.

Also from the perspective of the exhaust gas treatment system according to the embodiment of the invention of the second group, FIG. 1 conceptually illustrates the exhaust gas treatment facility from the sintering furnace 1 to the stack 2. As described earlier with reference to FIG. 1, the absorbent such as calcium hydroxide, calcium carbonate, and sodium bicarbonate is added to the exhaust gas from the sintering furnace 1. After absorbing SO₂ with the surface sedimentary layer of the fabric filter 3, dust is collected from the exhaust gas with the fabric filter 3. In the embodiment of the invention of the second group, CO in the exhaust gas is oxidized with the exhaust gas treatment system 4 and is eventually discharged from the stack 2.

Here, the exhaust gas treatment system 4 of this embodiment at least includes the gas-gas heater 5, the heating device 6, and the CO oxidation device 7.

The gas-gas heater 5 is designed to play a role to exchange heat between the exhaust gas from the sintering furnace 1 which is passed through the fabric filter 3 and the exhaust gas from the CO oxidation device 7. In this way, heat generated with the CO oxidation can be effectively recovered. In other words, it is possible to reduce a fuel cost of the heating device 6.

The temperature of the exhaust gas targeted for the treatment is in the range from about 60°C to 150°C at the location upstream of the gas-gas heater 5.

The heating device 6 is provided downstream of the gas-gas heater 5 and upstream of the CO oxidation device 7. The heating device 6 heats the exhaust gas flowed into the CO oxidation device 7 up to 240°C, for example, with the reaction heat of the combustion exhaust gas by using the heating burner. In other words, the heating device 6 heats the exhaust gas to a temperature (230°C to 270°C) suitable for oxidizing CO in the exhaust gas while using CO in the exhaust gas as a heating fuel substitute. After the exhaust gas is heated as described above, the exhaust gas is sent to the CO oxidation device 7.

Here, it is preferable to control the temperature to be increased depending on the CO concentration so as to increase the catalyst inlet temperature (the inlet temperature of the CO oxidation device 7) to such a temperature that raises a catalyst outlet temperature to a prescribed temperature at the CO concentration.

The CO oxidation device 7 is provided downstream of the heating device 6. The CO oxidation device 7 is a fixed-bed denitration device. The CO oxidation device 7 incorporates the CO oxidation catalyst according to the present invention, and is configured to oxidize CO in the exhaust gas. The CO oxidation includes two modes, namely, oxidation associated with denitration and oxidation with oxygen in the exhaust gas.

The CO oxidation catalyst according to the present invention aims at treating the exhaust gas that contains CO at a concentration in the range from 4000 to 15000 ppm. In this case, CO is a target for oxidation and also plays a role as the reductant for reducing NOₓ in the exhaust gas at the same time.

As described earlier with reference to FIGs. 2(a) to 2(d), the inventors of the present invention have envisaged the mechanisms of promoting the CO denitration reaction and suppressing the CO oxidation reaction in the case of using the Ir/BaSO₄ catalyst. A verification conducted thereafter by using the actual gas has shown that, while the CO denitration reaction was allowed to proceed preferentially as described above, it turned out that the outlet concentration of CO was sufficiently reduced even after a lapse of a long operating period.

Regarding the CO oxidation reaction, since TiO₂ has the larger specific surface area than BaSO₄, BaSO₄ should have a lower CO oxidation performance when only taking into account the mechanisms in FIGs. 2(c) and 2(d). In reality, however, the inventors have found that the use of BaSO₄ suppresses oxidation of SOₓ in the presence of SOₓ. Accordingly, the use of BaSO₄ presumably suppresses adsorption of SOₓ so as to keep SOₓ from inhibiting and deteriorating the performance. In other words, the inventors of the present invention have arrived at the conclusion that, although the CO denitration reaction was allowed to proceed preferentially, a different phenomenon took place to maintain the CO oxidation in the case of using BaSO₄.

This aspect has been proven by the examples to be described later.

In other words, the invention of the second group is directed to this aspect, and regards the Ir/BaSO₄ catalyst as the CO oxidation catalyst.

As will be clarified by the examples to be described later, according to the CO oxidation catalyst and the exhaust gas treatment system and method using the CO oxidation catalyst according to the invention of the second group, the CO oxidation performance is stable for a long period even in the presence of halogens, organic materials, organic silicon compounds, and SOₓ. Above all, the oxidation of SOₓ is suppressed in the presence of SOₓ. As a consequence, no purple smoke is generated due to an increase in SO₃, and an instrument located on a subsequent stage is not significantly affected by sulfuric acid corrosion.

Moreover, CO is oxidized instead of being simply discharged to the atmosphere, and the generated heat is thus recovered therefrom. Accordingly, it is possible to improve thermal efficiency.

### EXAMPLES

The exhaust gas denitration catalyst according to the invention of the first group will be described below in further detail with reference to the following examples. It is to be noted, however, that the present invention is not limited only to the following examples.

### Example 1 (Preparation of Exhaust Gas Denitration Catalyst as Honeycomb Catalyst)

An iridium (II) chloride solution (H₂IrCl₆) was diluted such that iridium was supported in a range from 0.1% to 2.0% by weight relative to a total amount of iridium and barium sulfate. After dipping barium sulfate (BaSO₄) in the aqueous solution, the obtained material was subjected to evaporation to dryness at 140°C. The obtained catalyst was calcined in air at 500°C for 5 hours. Thus, the BaSO₄ powder catalyst supporting iridium was prepared.

This catalyst in an amount of 1200 g, commercially available colloidal silica (silica sol containing SiO₂ at 20% by mass) in an amount of 681.6 g, alumina sol in an amount of 38.4 g, and ion-exchanged water in an amount of 3907.2 g were crushed and blended together in a ball mill to prepare a wash coat slurry.

A honeycomb material (4.2 mmp, 0.55 mmt, 5 holes × 10 holes × 500 mL) was dipped in the slurry prepared as described above. An excessive liquid portion in cells of the honeycomb material was blown away with compressed air.

Thereafter, the honeycomb material was calcined at 500°C for 5 hours so as to coat the honeycomb material with the catalyst (barium sulfate supporting iridium) in a coating amount of 100 g/m², and the honeycomb material was subjected to a reductive activation treatment at 600°C for 1 hour with 3% hydrogen/nitrogen.

### Example 2 (Activity Evaluation Test on Honeycomb Catalyst)

An activity evaluation test was conducted on the honeycomb catalyst prepared in Example 1. The temperature of the exhaust gas at the catalyst inlet was set in a range from 180°C to 360°C, and the evaluation was conducted under the following gas composition and at AV = 10.3 [Nm/hr]. Here, AV denotes an areal velocity (an amount of the gas / a total contact area of the catalyst). The unit of AV is Nm³/m²·h, which is expressed as (m³(normal))/m²·h) according to the International System of Units.

**Reactive gas composition:**

| | |
|---|---|
| NO: | 100 ppm |
| CO: | 10000 ppm |
| CO₂: | 10% |
| H₂O: | 10% |
| O₂: | 13% |
| SO₂: | 100 ppm |
| N₂: | remainder |

FIGs. 3(a) and 3(b) show NO conversion rates and CO conversion rates, respectively.

As shown in FIG. 3(a), the denitration rate increases sharply with a rise in temperature before reaching the peak of the denitration rate. A relatively large portion of CO is allotted to the denitration and a portion of CO to be combusted is low. After having reached the peak of the denitration rate, the denitration rate (the catalyst activity) gently declines even when the temperature of the exhaust gas becomes higher. In other words, the denitration rate does not decline sharply. Note that each CO conversion rate in FIG. 3(b) includes both the consumption of CO attributed to the CO reduction denitration reaction and the consumption of CO attributed to the CO oxidation.

From the results shown in FIG. 3(a), it is determined appropriate to set a lower limit of the supported amount of iridium to 0.25% by weight in view of the denitration performance. Meanwhile, an upper limit of the supported amount of iridium is preferably set to 2.0% by weight in a practical sense in light of costs and the like.

Here, the supported amount of iridium is more preferably set in a range from 0.5% to 1.0% by weight in light of both the peak of the NO conversion rate and cost.

### Example 3 (Comparative Denitration Tests with Different Exhaust Gas Denitration Catalyst)

Among the exhaust gas denitration catalysts used in Example 2, the one with iridium in an amount of 0.5% by weight supported on barium sulfate was employed as the exhaust gas denitration catalyst according to the present invention. The denitration test was conducted on a gas composition that contains a high concentration of CO in the range from 4000 to 15000 ppm while containing other substances as listed below. The temperature of the exhaust gas at the catalyst inlet was set in the range from 180°C to 300°C, and the test was conducted at AV = 10.3 [Nm/hr]. Here, Ir/TiO₂ (a titanium oxide support that supports iridium) was used as a comparative exhaust gas denitration catalyst. The comparative exhaust gas denitration catalyst was prepared in the same way as the method of preparing the catalyst according to the present invention. In other words, the comparative exhaust gas denitration catalyst was prepared in accordance with the virtually identical method except that barium sulfate was replaced with titanium oxide.

**Reactive gas composition:**

| | |
|---|---|
| NO: | 100 ppm |
| CO₂: | 10% |
| H₂O: | 10% |
| O₂: | 13% |
| SO₂: | 100 ppm |
| N₂: | remainder |

Results of the tests concerning a relation between the catalyst inlet temperature and either the denitration rate or the CO conversion rate in terms of the Ir/BaSO₄ catalyst (the exhaust gas denitration catalyst according to the present invention) and of Ir/TiO₂ (the comparative exhaust gas denitration catalyst) are shown in FIGs. 4(a) to 10(b). Regarding the exhaust gas denitration catalyst according to the present invention, the denitration rate increases relatively steeply with a rise in temperature toward a point to reach the peak of the denitration rate. Specifically, a relatively large portion of CO is allotted to the denitration before reaching the peak of the denitration rate and a portion of CO to be combusted is low. After having reached the peak of the denitration rate, the denitration rate (the catalyst activity) gently declined (the catalyst activity was retained) even when the temperature of the exhaust gas became higher.

FIGs. 11 to 13 show results of estimations based on the results shown in FIGs. 4(a) to 10(a) concerning a relation between a catalyst inlet CO concentration depending on the variation in temperature and the denitration rate (a control reference value in consideration of the variation in temperature) in terms of the Ir/BaSO₄ catalyst (the exhaust gas denitration catalyst according to the present invention) and of Ir/TiO₂ (the comparative exhaust gas denitration catalyst). Specifically, FIGs. 11 to 13 plot the denitration performances which are calculated based on the results in FIGs. 4(a) to 10(a) on the assumption that the temperatures vary in the ranges of ±15°C, ±20°C, and ±30°C, respectively, relative to control reference values in Table 1 below.

**[Table 1]**

| List of control reference value temperatures for denitration performance estimations under variations in temperature | | | | | | |
|---|---|---|---|---|---|---|
| Variation in temperature | ±30°C | | ±20°C | | ±15°C | |
| CO concentration [ppm] | Ir/BaSO₄ | Ir/TiO₂ | Ir/BaSO₄ | Ir/TiO₂ | Ir/BaSO₄ | Ir/TiO₂ |
| 2,000 | 264 | 264 | 265.5 | 268.5 | 264 | 270 |
| 4,000 | 261 | 261 | 259.5 | 262.5 | 261 | 264 |
| 6,000 | 258 | 258 | 256.5 | 259.5 | 258 | 261 |
| 8,000 | 258 | 255 | 256.5 | 256.5 | 255 | 258 |
| 10,000 | 255 | 252 | 253.5 | 253.5 | 252 | 255 |
| 15,000 | 252 | 249 | 250.5 | 250.5 | 246 | 252 |
| 20,000 | 249 | 249 | 244.5 | 247.5 | 243 | 249 |

It turns out that the exhaust gas denitration catalyst according to the present invention can achieve a higher denitration performance than that of the comparative exhaust gas denitration catalyst at the concentration of CO in the range from 4000 to 15000 ppm.

This means that the denitration rate can be maintained at the concentration of CO in the range from 4000 to 15000 ppm even when the variation in catalyst inlet temperature control and the variation in catalyst inlet cross-sectional temperature show the variations in temperature in the range of not only ±15°C or ±20°C, but also in the range of ±30°C.

The CO oxidation catalyst according to the invention of the second group will be described below in further detail with reference to the following examples. It is to be noted, however, that the present invention is not limited only to the following examples.

### Example 4 (Preparation of CO Oxidation Catalyst)

An iridium (II) chloride solution (H₂IrCl₆) was diluted such that iridium was supported at any of 0.5% by weight, 10.0% by weight, and 20.0% by weight relative to a total amount of iridium and barium sulfate. After dipping barium sulfate (BaSO₄) in each aqueous solution, the obtained material was subjected to evaporation to dryness at 140°C. The obtained catalyst was calcined in air at 500°C for 5 hours. Thus, the BaSO₄ powder catalyst supporting iridium was prepared.

This catalyst in an amount of 1200 g, commercially available colloidal silica (silica sol containing SiO₂ at 20% by mass) in an amount of 681.6 g, alumina sol in an amount of 38.4 g, and ion-exchanged water in an amount of 3907.2 g were crushed and blended together in a ball mill to prepare a wash coat slurry.

A honeycomb material (4.2 mmp, 0.55 mmt, 5 holes × 10 holes × 500 mL) was dipped in the slurry prepared as described above. An excessive liquid portion in cells of the honeycomb material was blown away with compressed air.

Thereafter, the honeycomb material was calcined at 500°C for 5 hours so as to coat the honeycomb material with the catalyst (barium sulfate supporting iridium) in a coating amount of 100 g/m², and the honeycomb material was subjected to a reductive activation treatment at 600°C for 1 hour with 3% hydrogen/nitrogen.

### Comparative Example 1 (Preparation of Pt/TiO₂ Catalyst)

A chloroplatinic acid aqueous solution (H₂PtCl₆·6H₂O) was prepared such that iridium was supported at 14% by weight relative to a total amount of platinum (Pt) and titanium dioxide (TiO₂). After dipping titanium dioxide (TiO₂) in the aqueous solution, the obtained material was subjected to evaporation to dryness at 140°C. The obtained catalyst was calcined in air at 500°C for 5 hours. Thus, a TiO₂ powder catalyst supporting platinum was prepared.

Thereafter, a honeycomb catalyst was prepared in the same manner as Example 4 by using the TiO₂ powder catalyst prepared as described above.

### Comparative Example 2 (Preparation of 11wt%-Pt-2wt%-Ir/TiO₂ Catalyst)

A chloroplatinic acid aqueous solution (H₂PtCl₆·6H₂O) and an iridium (II) chloride solution (H₂IrCl₆) were prepared such that platinum was supported at 11% by weight and iridium was supported at 2% by weight relative to a total amount of platinum, iridium, and titanium dioxide. After dipping titanium dioxide (TiO₂) in a mixed aqueous solution obtained by mixing those solutions, the obtained material was subjected to evaporation to dryness at 140°C. The obtained catalyst was calcined in air at 500°C for 5 hours. Thus, a TiO₂ powder catalyst supporting platinum and iridium was prepared.

Thereafter, a honeycomb catalyst was prepared in the same manner as Example 4 by using the TiO₂ powder catalyst prepared as described above.

### Comparative Example 3 (Operating Test on Pt/TiO₂ Catalyst)

An operating test was conducted on the honeycomb catalyst prepared in Comparative Example 1. The temperature of the exhaust gas at the catalyst inlet was set to about 330°C, and the evaluation was conducted under the following gas composition and at AV = 22 [Nm/hr].

**Reactive gas composition:**

| | |
|---|---|
| NO: | 100 ppm |
| CO: | 10000 ppm |
| CO₂: | 10% |
| H₂O: | 7% |
| O₂: | 13% |
| SO₂: | 100 ppm |
| N₂: | remainder |

FIG. 14 shows changes in catalyst inlet temperature and catalyst outlet temperature with passage of operating time. Meanwhile, FIG. 15 shows changes in NOₓ concentration and CO concentration at the catalyst outlet with passage of operating time.

As can be seen in FIG. 14, the catalyst outlet temperature declined with the passage of the operating time. Meanwhile, as can be seen in FIG. 15, the NOₓ concentration did not change with the passage of the operating time whereas the CO concentration was increased with the passage of the operating time.

The results in FIGs. 14 and 15 show that the CO oxidation performance of the Pt/TiO₂ catalyst is deteriorated with the passage of the operating time.

### Example 5 (Operating Test on CO Oxidation Catalyst of Present Invention)

An operating test was conducted on the honeycomb catalyst prepared in Example 4 (prepared by using the BaSO₄ powder catalyst supporting 20.0% by weight of iridium) in the actual gas having the same gas composition as that of Comparative Example 3.

FIG. 16 shows changes in catalyst inlet temperature and catalyst outlet temperature with passage of operating time. Meanwhile, FIG. 17 shows changes in NOₓ concentration and CO concentration at the catalyst outlet with passage of operating time.

As can be seen in FIG. 16, the catalyst outlet temperature did not decline with the passage of the operating time. Meanwhile, as can be seen in FIG. 17, the NOₓ concentration did not change with the passage of the operating time and the CO concentration was not significantly increased with the passage of the operating time. Here, fluctuations around 1300 hours and after 2200 hours in FIG. 16 were caused by changing an inlet temperature of a testing device and should therefore be eliminated from consideration. Moreover, a fluctuation around 1300 hours in FIG. 17 is due to a decline in reactivity of the catalyst due to a drop in the inlet temperature of the testing device and should therefore be eliminated from consideration likewise.

The results in FIGs. 16 and 17 show that the CO oxidation performance of the CO oxidation catalyst according to the present invention is not deteriorated with the passage of the operating time.

### Example 6 (Comparison of SO₂ Oxidation Rate)

A SO₂ oxidation rate was compared between the honeycomb catalyst prepared in Example 4 (the BaSO₄ powder catalyst supporting 20.0% by weight of iridium) and the honeycomb catalyst prepared in Comparative Example 2 (prepared by using the 11wt%-Pt-2wt%-Ir/TiO₂ catalyst) by using a simulated gas having the following gas composition.

**Reactive gas composition:**

| | |
|---|---|
| NO: | 100 ppm |
| CO: | 10000 ppm |
| CO₂: | 10% |
| H₂O: | 7% |
| O₂: | 13% |
| SO₂: | 100 ppm |
| N₂: | remainder |

As for the catalysts, two stages of the honeycomb catalysts of each type were arranged in series, and the SO₂ oxidation rates were compared in terms of two catalyst inlet temperatures.

The first stage of the catalyst of each type was evaluated at AV = 21.7 [Nm/hr]. Results are shown in FIG. 18. The second stage of the catalyst of each type was evaluated at AV = 10.9 [Nm/hr]. Results are shown in FIG. 19.

Regarding the outlet at the first stage and the outlet at the second stage, it turned out that the SO₂ oxidation rate was low and the SO₂ was barely oxidized at each of the temperatures in the case of using the honeycomb catalyst prepared in Example 4 according to the present invention. The SO₂ oxidation developed in the case of using the honeycomb catalyst prepared in Comparative Example 2.

### Example 7 (Operating Test on CO Oxidation Catalyst of Present Invention)

An operating test was conducted on the honeycomb catalyst prepared in Example 4 (prepared by using the BaSO₄ powder catalyst supporting 0.5% by weight of iridium) in the actual gas having the same gas composition as that of Comparative Example 3.

FIG. 20 shows changes in catalyst inlet temperature and catalyst outlet temperature with passage of operating time. Meanwhile, FIG. 21 shows changes in NOₓ concentration and CO concentration at the catalyst outlet with passage of operating time.

As can be seen in FIG. 20, the catalyst outlet temperature did not decline with the passage of the operating time. Meanwhile, as can be seen in FIG. 21, the NOₓ concentration did not change with the passage of the operating time and the CO concentration was not significantly increased with the passage of the operating time.

The results in FIGs. 20 and 21 show that the CO oxidation performance of the CO oxidation catalyst according to the present invention is not deteriorated with the passage of the operating time.

### Example 8 (Operating Test on CO Oxidation Catalyst of Present Invention)

An operating test was conducted on the honeycomb catalyst prepared in Example 4 (prepared by using the BaSO₄ powder catalyst supporting 10.0% by weight of iridium) in the actual gas having the same gas composition as that of Comparative Example 3.

FIG. 22 shows changes in catalyst inlet temperature and catalyst outlet temperature as well as changes in actual gas flow volume at the catalyst inlet with passage of operating time. Meanwhile, FIG. 23 shows changes in NOₓ concentration and CO concentration at the catalyst inlet and outlet with passage of operating time.

As can be seen in FIG. 22, the catalyst outlet temperature did not decline with the passage of the operating time. Meanwhile, as can be seen in FIG. 23, the NOₓ concentration at the catalyst outlet did not change with the passage of the operating time and the CO concentration at the catalyst outlet was not significantly increased with the passage of the operating time.

The results in FIGs. 22 and 23 show that the CO oxidation performance of the CO oxidation catalyst according to the present invention is not deteriorated with the passage of the operating time.

Here, fluctuations around 1 to 3 hours in FIG. 22 were caused by a change in warm temperature air due to start-up of the testing device and should therefore be eliminated from consideration. Fluctuations of outlet CO around 1 to 3 hours in FIG. 23 were also caused by the change in warm temperature air due to the start-up of the testing device and should therefore similarly be eliminated from consideration.

From the results in FIGs. 16, 17, and 20 to 23, it turns out that the favorable CO oxidation performance is obtained from the CO oxidation catalyst according to the invention of the second group with the passage of the operating time as long as the amount of iridium supported by barium sulfate is at least in the range from 0.25% to 20.0% by weight. Moreover, while a catalyst coating amount of 100 g/m² is required in the case in which the concentration of iridium is 0.5% by weight, the coating amount is reduced to 5 g/m² when the concentration of iridium is 10% by weight. In the latter case, it is easy to achieve uniform coating and the coating is less likely to detach. Thus, this case is favorable in terms of durability.

### INDUSTRIAL APPLICABILITY

The exhaust gas denitration catalyst, the exhaust gas treatment system, and the exhaust gas treatment method according to the invention of the first group are expected to achieve the favorable denitration performance irrespective of the temperature distribution of the exhaust gas in a flue while using CO as the reductant.

The CO oxidation catalyst, the exhaust gas treatment system, and the exhaust gas treatment method according to the invention of the second group can subject the exhaust gas containing a high concentration of CO to the oxidation treatment of the contained CO without promoting oxidation of SOₓ.

### REFERENCE SYMBOL LIST

- 1: sintering furnace
- 2: stack
- 3: fabric filter
- 4: exhaust gas treatment system
- 5: gas-gas heater
- 6: heating device
- 7: denitration device (CO oxidation device)
- 10: NO
- 11: nitrogen
- 12, 18, 23, 25: oxygen
- 13: N₂
- 14,20: Ir
- 15, 22: CO
- 17: support
- 21: titanium oxide
- 24: barium sulfate

## Claims

1. An exhaust gas denitration catalyst comprising:
iridium in a range from 0.25% to 20.0% by weight being supported by barium sulfate, wherein
the catalyst is used to treat an exhaust gas containing CO in a range from 4000 to 15000 ppm.

2. An exhaust gas denitration catalyst comprising:
iridium in a range from 0.25% to 2.0% by weight being supported by barium sulfate, wherein
the catalyst is used to conduct a denitration treatment on an exhaust gas containing CO in a range from 4000 to 15000 ppm and containing a NOₓ component targeted for reduction and removal.

3. The exhaust gas denitration catalyst according to claim 2, wherein the catalyst is used in a case in which a combination of a variation in catalyst inlet temperature control and a variation in catalyst inlet cross-sectional temperature is in a range of ±15°C at a minimum.

4. The exhaust gas denitration catalyst according to claim 2 or 3, wherein the exhaust gas is an exhaust gas from a sintering furnace.

5. An exhaust gas treatment system comprising:
a denitration device including the exhaust gas denitration catalyst according to any one of claims 2 to 4.

6. The exhaust gas treatment system according to claim 5, further comprising:
a heating device configured to heat the exhaust gas before the exhaust gas is flowed into the denitration device.

7. An exhaust gas treatment method comprising:
reducing and removing a NOₓ component with a denitration device including the exhaust gas denitration catalyst according to any one of claims 1 to 3, while using CO contained in the exhaust gas.

8. The exhaust gas treatment method according to claim 7, wherein the exhaust gas is heated before the exhaust gas is flowed into the denitration device.

9. A CO oxidation catalyst comprising:
iridium in a range from 0.25% to 20.0% by weight being supported by barium sulfate, wherein
the catalyst is used to conduct a treatment to oxidize CO in an exhaust gas containing CO in a range from 4000 to 15000 ppm.

10. The CO oxidation catalyst according to claim 9, wherein the exhaust gas is an exhaust gas from a sintering furnace.

11. An exhaust gas treatment system comprising:
a CO oxidation device including the CO oxidation catalyst according to claim 9 or 10.

12. The exhaust gas treatment system according to claim 11, further comprising:
a heating device configured to heat the exhaust gas before the exhaust gas is flowed into the CO oxidation device.

13. An exhaust gas treatment method comprising:
oxidizing CO contained in an exhaust gas with a CO oxidation device including the CO oxidation catalyst according to claim 9 or 10.

14. The exhaust gas treatment method according to claim 13, wherein the exhaust gas is heated before the exhaust gas is flowed into the CO oxidation device.
